# EUROPÄISCHE PATENTANMELDUNG

(11) **EP 3 889 704 A1**
(43) Veröffentlichungstag der Anmeldung: **06.10.2021**
(21) Anmeldenummer: 20167488.4
(22) Anmeldetag: 01.04.2020
(51) Int. Cl.: G05B 19/18, G05B 19/042

(54) **VERFAHREN UND ANORDNUNG ZUR ERMITTLUNG VON NACHBARSCHAFTSBEZIEHUNGEN ZWISCHEN EINEM AKTOR UND SENSOREN IN EINER ANLAGE**

(71) Anmelder: Siemens Aktiengesellschaft, 80333 München (DE)
(72) Erfinder: Augustin, Martin, 76227 Karlsruhe (DE); Lüder, Stefan, 76149 Karlsruhe (DE)

(57) **Zusammenfassung**

In einer Anlage zur Steuerung eines technischen Prozesses wirken ein Aktor (51), der den Prozess beeinflusst, und mehrere Sensoren (41, 42, 43), die Messwerte von Prozessgrößen erfassen, zusammen und kommunizieren miteinander.

Um die Funktionsfähigkeit des Aktors in der Anlage prüfen zu können, wird der Sensor mit der größten Wirkungsnähe zu dem Aktor (51) ermittelt, indem der Aktor (51) den Prozess nach einem vorgegebenen Testmuster beeinflusst, von den Sensoren (41, 42, 43) als Antworten (16) auf das Testmuster erhaltene Messwertfolgen nach dem vorgegebenen Testmuster abgesucht werden und derjenige Sensor ausgewählt wird, dessen Antwort hinsichtlich Antwortqualität und Antwortzeit ein vorgegebenes Gütekriterium am besten erfüllt.

## Beschreibung

Die Erfindung betrifft ein Verfahren zur Ermittlung von Nachbarschaftsbeziehungen zwischen einem Aktor und mit diesem in einer Anlage zur Steuerung eines technischen Prozesses zusammenwirkenden und mit ihm kommunizierenden Sensoren, wobei der Aktor den Prozess beeinflusst und die Sensoren Messwerte von Prozessgrößen erfassen.

Die Erfindung betrifft ferner eine Anordnung zur Ermittlung von Nachbarschaftsbeziehungen zwischen einem Aktor und mit diesem in einer Anlage zur Steuerung eines technischen Prozesses zusammenwirkenden und mit ihm kommunizierenden Sensoren, wobei der Aktor den Prozess beeinflusst und die Sensoren Messwerte von Prozessgrößen erfassen.

In Anlagen der Prozessindustrie, z. B. der chemischen, petrochemischen, pharmazeutischen, Lebensmittel und andere Produkte herstellenden Industrie, führen in der Feldebene örtlich verteilte, dezentrale Feldgeräte vorgegebene Funktionen im Rahmen der Anlagenautomatisierung aus und tauschen dabei prozess-, anlagen- und/oder geräterelevante Informationen mit Komponenten eines übergeordneten Steuerungs- und Leitsystems und ggf. auch untereinander aus. Zu den Feldgeräten gehören Sensoren (Messumformer für, z. B. Füllstand, Durchfluss, Druck und Temperatur, Analysengeräte für Gas- oder Flüssigkeitsanalyse, Wägesysteme), die Prozessdaten in Form von Messwerten von Prozessgrößen übermitteln, und Aktoren (Stellantriebe, Stellungsregler für Ventile, sonstige dezentrale Regler und Frequenzumrichter für elektromotorische Antriebe von, z. B. Pumpen), die Prozessdaten in Form von Stelldaten erhalten, um den Prozess zu beeinflussen.

Die Feldgeräte sind üblicherweise mit einer Selbstüberwachungsfunktionalität ausgestattet, die die Funktionsfähigkeit des Feldgeräts während des laufenden Betriebs überwacht und so z. B. die Richtigkeit der gelieferten Messwerte sicherstellt. Insbesondere bei Aktoren kann die Prüfung der Funktionsfähigkeit auch im Rahmen eines Selbsttests außerhalb des laufenden Betriebs oder in einer den laufenden Betrieb nur unwesentlich störenden Weise erfolgen. Die erhaltenen Daten zum Zustand oder zur Leistungsfähigkeit des Feldgerätes können geräteintern gespeichert oder z. B. in eine Cloud übermittelt und dort gespeichert werden.

Die Funktionsfähigkeit von Aktoren lässt sich oft nur im Verbund mit anderen Feldgeräten, insbesondere Sensoren, ermitteln, die in der Anlage wirkungsnah in unmittelbarer Nachbarschaft zu dem Aktor installiert sind. Einen typischen Verbund bilden z. B. ein Stellungsregler (Positioner) mit Stell- oder Regelventil und ein Durchflussmessumformer, die zusammen einen Durchfluss regeln. Ein weiteres Beispiel ist eine Pumpe mit Frequenzumrichter-Antrieb und ein Durchflussmessumformer, die ebenfalls zusammen einen Durchfluss regeln. Ergänzend oder anstelle des Durchflussmessumformer kann ein Druckmessumformer Teil des Verbundes werden, wenn ein Druck geregelt werden soll.

Ein Problem besteht darin, dass die Verknüpfung von Messwerten unterschiedlicher Feldgeräte manuellen Engineering-Aufwand bedeutet. Die Verknüpfung von Messwerten kann z. B. im Leitsystem erfolgen, d. h. die Prozesskommunikation wird projektiert und die Werte werden über das Prozessabbild der Steuerung einem Algorithmus zur Weiterverarbeitung zur Verfügung gestellt. Auch eine lokale Verschaltung von Messsignalen über Ein-/Ausgabe-Karten (I/O-Karten) in den Geräten muss manuell eingerichtet werden.

Der Erfindung liegt daher die Aufgabe zugrunde, die Ermittlung von Nachbarschaftsbeziehungen zwischen einem Aktor und Sensoren in einer Anlage zu automatisieren, um so den Engineering-Aufwand für eine Prüfung der Funktionsfähigkeit eines Aktors unter Verwendung von Messwerten benachbarter Sensoren zu verringern.

Gemäß der Erfindung wird die Aufgabe durch das in Anspruch 1 angegebene Verfahren bzw. die in Anspruch 5 definierte Anordnung gelöst, von denen vorteilhafte Weiterbildungen in den Unteransprüchen angegeben sind.

Gegenstand der Erfindung ist somit ein Verfahren zur Ermittlung von Nachbarschaftsbeziehungen zwischen einem Aktor und mit diesem in einer Anlage zur Steuerung eines technischen Prozesses zusammenwirkenden und mit ihm kommunizierenden Sensoren, wobei der Aktor den Prozess beeinflusst und die Sensoren Messwerte von Prozessgrößen erfassen, dadurch gekennzeichnet, dass der Aktor
- den Prozess nach einem vorgegebenen Testmuster beeinflusst,
- von den Sensoren als Antworten auf das Testmuster erhaltene Messwertfolgen nach dem vorgegebenen Testmuster absucht und
- den Sensor als den mit der größten Wirkungsnähe zu dem Aktor identifiziert, dessen Antwort hinsichtlich Antwortqualität und Antwortzeit ein vorgegebenes Gütekriterium am besten erfüllt.

Gegenstand der Erfindung ist ferner eine Anordnung zur Ermittlung von Nachbarschaftsbeziehungen zwischen einem Aktor und mit diesem in einer Anlage zur Steuerung eines technischen Prozesses zusammenwirkenden und mit ihm kommunizierenden Sensoren, wobei der Aktor den Prozess beeinflusst und die Sensoren Messwerte von Prozessgrößen erfassen, dadurch gekennzeichnet, dass der Aktor dazu ausgebildet ist,
- den Prozess nach einem vorgegebenen Testmuster zu beeinflussen,
- von den Sensoren als Antworten auf das Testmuster erhaltene Messwertfolgen nach dem vorgegebenen Testmuster abzusuchen und
- den Sensor als den mit der größten Wirkungsnähe zu dem Aktor zu identifizieren, dessen Antwort hinsichtlich Antwortqualität und Antwortzeit ein vorgegebenes Gütekriterium am besten erfüllt.

Zur Prüfung seiner Funktionsfähigkeit in der Anlage kann dann der Aktor die Messwerte des identifizierten, wirkungsnächsten Sensors verwenden.

Bei dem vorgegebenen Testmuster kann es sich um eine Sequenz von Einzelbeeinflussungen des Prozesses handeln, die unterschiedliche zeitlich Abstände zueinander haben können und/ oder unterschiedlich stark sein können.

Die von den Sensoren als Antworten auf das Testmuster erhaltene Messwertfolgen werden nach dem vorgegebenen Testmuster abgesucht und hinsichtlich Antwortqualität und Antwortzeit bewertet. Die Antwortqualität beinhaltet insbesondere die Wiedergabegenauigkeit des Testmusters in der als Antwort erhaltenen Messwertfolge, also das Maß der Korrelation zwischen dem Testmuster und der Antwort. Ein zusätzliches Gütekriterium kann auch die Amplitude des in der Antwort wiedererkannten Testmusters sein, also wie stark die von dem Sensor erfasste Prozessgröße auf die Beeinflussung des Prozesses durch den Aktor reagiert. Die Antwortzeit entspricht dem zeitlichen Abstand, in dem das Testmuster in der Antwort nach der Beeinflussung des Prozesses durch den Aktor erscheint.

Anhand der Bewertungen der Antworten der Sensoren auf die Beeinflussung des Prozesses mit dem Testmuster wird der Sensor ermittelt, dessen Antwort hinsichtlich Antwortqualität und Antwortzeit ein vorgegebenes Gütekriterium am besten erfüllt. Im besten Fall ist dies der Sensor, bei dem die von ihm erfasste Prozessgröße am schnellsten, genauesten und stärksten auf die Prozessbeeinflussung mit dem Testmuster reagiert. Die Antwort eines Sensors mit kurzer Antwortzeit und unzureichender Antwortqualität wird das Gütekriterium nicht oder schlechter erfüllen als die Antwort eines anderen Sensors mit längerer Antwortzeit aber besserer Antwortqualität. Das Gütekriterium ist also ein Maß für die Wirkungsbeziehung zwischen dem Aktor und dem Sensor in der technischen Anlage.

Die Funktionsfähigkeit des Aktors kann jetzt im Verbund mit dem ausgewählten Sensor ermittelt werden. Das heißt, für die Beurteilung der Funktions- oder Leistungsfähigkeit des Aktors werden neben Daten des Aktors auch die Messwerte des ausgewählten Sensors herangezogen.

Der Aktor kann die Sensoren zur Übermittlung der während der Beeinflussung des Prozesses nach dem vorgegebenen Testmuster erfassten Messwerte aktivieren. Alternativ können die Sensoren zur Speicherung der während der Beeinflussung des Prozesses nach dem vorgegebenen Testmuster erfassten Messwerten und anschließenden Übermittlung der abgespeicherten Messwertfolgen an den Aktor aktiviert werden.

Die Funktionsfähigkeit des Aktors kann auch im Verbund mit zwei oder mehr Sensoren unterschiedlichen Typs, z. B. Durchflussmessumformer und Druckmessumformer, ermittelt werden. Für diesen Fall kann der Aktor die Sensoren unabhängig voneinander aus einer Gruppe von jeweils gleichen Sensortypen auswählen, wobei für jede Gruppe von Sensoren jeweils ein anderes Gütekriterium verwendet werden kann.

Im Weiteren wird die Erfindung anhand von Ausführungsbeispielen und unter Bezugnahme auf die Figuren der Zeichnung erläutert; im Einzelnen zeigen
- Fig. 1: ein Beispiel für eine technische Anlage in der Aktoren und Sensoren zusammenwirken,
- Fig. 2: einen Aktor und mehrere Sensoren, deren Nachbarschaft zu dem Aktor ermittelt werden soll, und
- Fig. 3 bis 5: beispielhafte Ablaufdiagramme für das erfindungsgemäße Verfahren.

Gleiche Bezugszeichen haben in den verschiedenen Figuren die gleiche Bedeutung. Die Darstellungen sind rein schematisch und repräsentieren keine Größenverhältnisse.

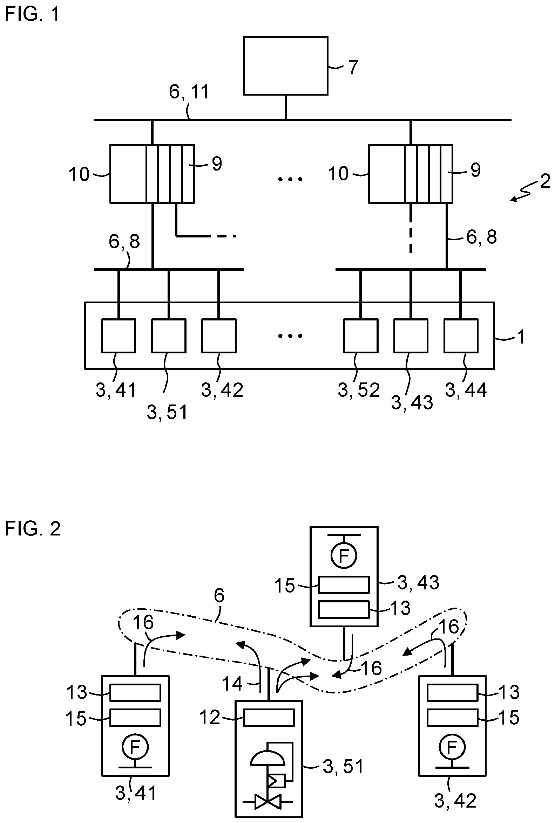

Fig. 1 zeigt in vereinfachter schematischer Darstellung ein Beispiel für eine technische Anlage 1, in der ein Prozess abläuft und mittels eines Automatisierungssystems 2 gesteuert wird. Das Automatisierungssystem 2 weist eine Vielzahl von Feldgeräten 3 auf, die auf Feldebene, also in dem Prozess, vorgegebene Mess-, Steuer- und Regelungsfunktionen wahrnehmen und dabei als Sensoren 41, 42, 43, 44 insbesondere Messwerte von Prozessgrößen erfassen und als Aktoren 51, 52 durch Stelleingriffe auf den Prozess einwirken. Typische Sensoren sind Messumformer für Füllstand, Durchfluss, Druck und Temperatur, Analysengeräte für Gas- oder Flüssigkeitsanalyse und Wägesysteme. Typische Aktoren sind Stellantriebe, Stellungsregler für Ventile, sonstige dezentrale Regler und Frequenzumrichter für elektromotorische Antriebe von, z. B. Pumpen.

Die Feldgeräte 3 tauschen über ein in der Regel drahtgebundenes Kommunikationssystem 6 prozess-, funktions- und/oder geräterelevante Daten untereinander und mit einem übergeordneten Steuerungs- und Leitsystem 7 aus, wozu die Feldgeräte 3 z. B. über Feldbusse 8 an Ein- und Ausgabe-Baugruppen 9 von Automatisierungsgeräten 10, z. B. speicherprogrammierbare Steuerungen (SPS), angeschlossen sind, welche wiederum einzeln oder über einen zentralen Anlagenbus 11 mit dem übergeordneten Steuerungs- und Leitsystem 7 verbunden sind.

Die in Fig. 1 gezeigte Anordnung der Feldgeräte 3 orientiert sich an ihrer Verbindung mit den Feldbussen 8 des Kommunikationssystems und gibt nicht ihre tatsächliche Lage innerhalb der Anlage wieder.

Fig. 2 zeigt beispielhaft den Aktor 51 in Form eines Stellungsreglers mit Stellventil und die Sensoren 41, 42, 43, bei denen es sich hier um Durchflussmessumformer handelt. Der Aktor 51 und die Sensoren 41, 42, 43 kommunizieren über das Kommunikationssystem 6, auf dessen Struktur es hier nicht ankommt. Grundsätzlich können die Feldgeräte 3 auch über alternative Kommunikationswege, z. B. drahtlos, miteinander kommunizieren, da die für die Erfindung relevanten Sensoren in der Praxis in demselben Anlagenteil wie der Aktor bzw. nicht allzu weit von diesem entfernt angeordnet sind.

Um den Sensor mit der größten Wirkungsnähe zu ermitteln, enthält der Aktor 51 eine Applikation (Zusatzprogramm) 12, über die er bei seiner Inbetriebnahme entsprechend einem vorgegebenen Testmuster auf den Prozess einwirkt, um denjenigen Sensor zu ermitteln, der mit den von ihm erfassten Messwerten die schnellste und genaueste Reaktion auf dieses Testmuster liefert. Dazu enthalten die Sensoren 41, 42, 43 entsprechende Applikationen 13, um als Antwort auf die Prozessanregung durch den Aktor 51 ihre Messwerte an diesen zu übermitteln.

Im Falle des Stellungsreglers kann das Testmuster aus einer Sequenz von charakteristischen Stellbewegungen (Öffnen/ Schließen) des Stellventils bestehen. Der Start der Sequenz kann dabei über eine Benutzerschnittstelle (geräteeigene Tastatur oder Handbedientool wie Smartphone, PDA oder Handheld) manuell erfolgen oder sie startet automatisch als Teil des Gerätehochlaufs. Die Sequenz ist dabei vorzugsweise von solch kurzer Dauer und/oder solch geringer Intensität, dass durch sie der eigentliche Prozess nicht beeinflusst wird. Andererseits ist sie lang genug und von solcher Intensität, dass das Testmuster von den Sensoren 41, 42, 43 in der näheren Prozessumgebung des Aktors 51 erfasst werden kann. In Abhängigkeit von dem Prozess besteht die Option, die Dauer der Sequenz und/oder ihre Wiederholrate einzustellen. Insbesondere bei hinreichend trägen Prozessen kann die Dauer der Sequenz erhöht werden, um die Möglichkeit der Detektion des Testmusters in den Messwerten der Sensoren 41, 42, 43 zu erhöhen. Die Prozessbeeinflussung entsprechend dem Testmuster kann auch während des Betriebs oder in bestimmten Abständen durchgeführt werden, damit eine Nachbarschaftsbeziehung des Aktors 51 zu den Sensoren 41, 42, 43 fortlaufend verifiziert werden kann.

Die Applikation 12 in dem Aktor 51 ermöglicht diesem einen Kommunikationszugriff auf die Sensoren 41, 42, 43. Zunächst sendet der Aktor 51, z. B. als Multicast oder Broadcast, eine Erkennungsanfrage 14 in das Kommunikationssystem 6, die einen Aufruf enthält, dass sich Sensoren eines vorgegebenen Sensortyps, hier z. B. Durchflussmessumformer, melden sollen. Der Aufruf kann zunächst nur die Anfrage nach der Kommunikationsadresse des Sensors beinhalten, wobei die Anfrage nach den Sensormesswerten im Anschluss separat erfolgt. Alternativ kann der Aufruf gleichzeitig die Aufforderung beinhalten, die Messwerte mitzuliefern, bzw. die Sensoren machen dies automatisch. Schließlich kann der Aufruf auch die Aufforderung enthalten, dass die Sensoren 41, 42, 43 die von ihnen erfassten Messwerte über eine vorgegebene Dauer oder bis zum Zeitpunkt eines neuen Aufrufs des Aktors 51 in einem Datenlogger 15 speichern sollen. Die Sensoren 41, 42, 43 senden die angeforderten Informationen und Daten 16 an den Aktor 51.

Gleichzeitig oder zeitnah zu der Anforderung der Messwerte von den Sensoren 41, 42, 43 führt der Aktor 51 die Prozessbeeinflussung entsprechend dem Testmuster durch und liest die von den Sensoren 41, 42, 43 gelieferten Messwerte ein. Nach einer vorgegebenen Zeit fordert der Aktor 51 die Sensoren 41, 42, 43 auf, die Übersendung ihrer Messwerte zu beenden. Alternativ kann der Aktor den Sensoren 41, 42, 43 zuvor ein Zeitintervall mitgeteilt haben, innerhalb dessen sie die Messwerte an ihn übertragen sollen.

Auf Basis der von den einzelnen Sensoren 41, 42, 42 empfangenen Messwertfolgen ermittelt die Applikation 12 in dem Aktor 51 denjenigen Sensor, der mit der höchsten Wahrscheinlichkeit in Wirkrichtung hinter ihm in der Anlage 1, z. B. an einem Prozessrohr, verbaut ist. Dies erfolgt durch Auswertung der erhaltenen Messwertfolgen hinsichtlich Antwortqualität und Antwortzeit. Das heißt, der Sensor, dessen von ihm gelieferte Messwertfolge ein vorgegebenes Gütekriterium am besten erfüllt, ist mit der höchsten Wahrscheinlichkeit der Sensor in direkter wirkungsnaher Nachbarschaft zu dem Aktor 51.

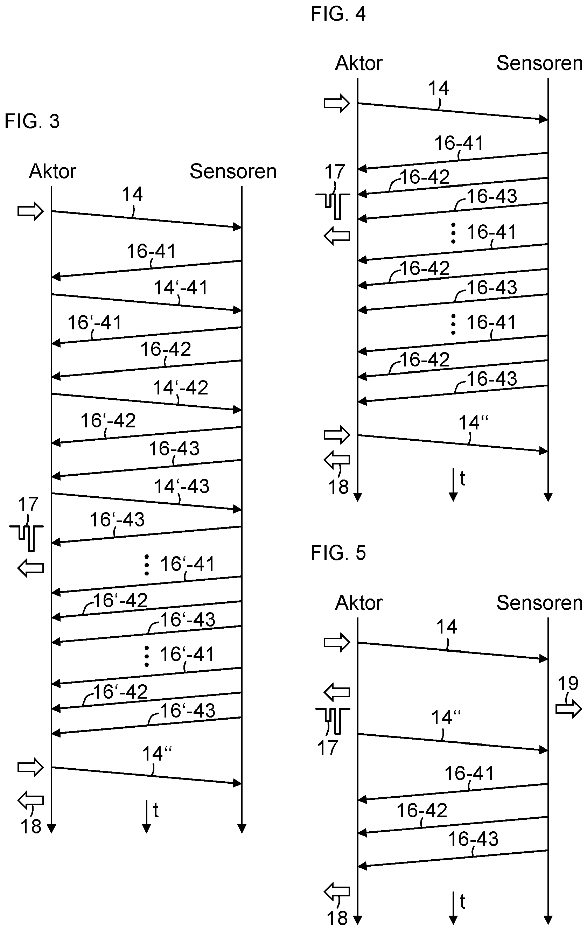

Fig. 3 zeigt ein Ablaufdiagramm eines ersten Beispiels zur Ermittlung des Sensors mit der größten Wirkungsnähe zu dem Aktor. Wie bereits erläutert, sendet der Aktor eine Erkennungsanfrage 14 an die Sensoren in der Anlage 1. Diese Erkennungsanfrage 14 kann auf einen bestimmten Sensortyp, z. B. einen Durchflussmesser, beschränkt sein und ggf. später für einen anderen Sensortyp, z. B. einen Druckmesser, wiederholt werden. Die Sensoren, hier 41, 42, 43 (Fig. 2), senden in ihren Antworten 16-41, 16-42, 16-43 ihre Kommunikationsadressen in dem Kommunikationssystem 6 an den Aktor 51, der anschließend oder zu einem späteren geeigneten Zeitpunkt automatisch oder nach Bedieneingabe über die oben erwähnte Benutzerschnittstelle Anforderungen 14'-41, 14'-42, 14'-43 an die Sensoren sendet, die von ihnen erfassten Messwerte zu übermitteln. Daraufhin senden die Sensoren 41, 42, 43 in ihren Antworten 16'-41, 16'-42, 16'-43 die von ihnen erfassten Messwerte so lange an den Aktor 51, bis dieser sie durch einen Multicast- oder Broadcast-Befehl 14'' dazu aufruft, die Übersendung der Messwerte zu beenden. Gleichzeitig oder zeitnah zu der Anforderung der Messwerte von den Sensoren wirkt der Aktor 51 entsprechend dem Testmuster 17 auf den Prozess ein. Schließlich werden die von den einzelnen Sensoren 41, 42, 42 empfangenen und in dem Aktor 51 zwischengespeicherten Messwertfolgen ausgewertet (18), um, wie weiter oben bereits beschrieben, denjenigen Sensor zu ermitteln, der mit der höchsten Wahrscheinlichkeit in Wirkrichtung hinter dem Aktor 51 in der Anlage 1 verbaut ist.

Das in Fig. 4 gezeigte Ausführungsbeispiel zu dem erfindungsgemäßen Verfahren unterscheidet sich von dem nach Fig. 3 dadurch, dass der Aktor 51 mit der Erkennungsanfrage 14 an die Sensoren diese auffordert, in ihren Antworten 16-41, 16-42, 16-43 neben den Kommunikationsadressen auch die Messwerte zu senden.

Bei dem in Fig. 5 gezeigte Ausführungsbeispiel werden die Sensoren 41, 42, 43 durch den Aufruf 14 aufgefordert, die von ihnen erfassten Messwerte in ihrem jeweiligen einem Datenlogger 15 zwischenzuspeichern (19). Nachdem die Prozessbeeinflussung entsprechend dem Testmuster 17 durchgeführt wurde, schickt der Aktor 51 erneut einen Multicast- oder Broadcast-Befehl 14'' an die Sensoren 41, 42, 43, die daraufhin die aufgezeichneten Messwertfolgen an den Aktor 51 zur Auswertung 18 übermitteln.

Im Folgenden wird am Beispiel eines Stellungsreglers mit Stell- oder Regelventil (Aktor 51) und eines Durchflussmessumformers (z. B. 43), der als Sensor mit der größten Wirkungsnähe zu dem Aktor 51 ermittelt wurde, die Prüfung der Funktionsfähigkeit des Aktors 51 in der Anlage 1 erläutert.

Für den Stellungsregler möchte man über den Verlauf seiner Betriebszeit ermitteln, ob die Regelperformance weiterhin gegeben ist. Dafür bildet der Stellungsregler eine Histogrammfunktion mit z. B. 10 Stufen von 0, 10%, 20%,... 100% Öffnungsgrad. Zu Beginn der Betriebszeit fährt der Stellungsregler eine Rampe und kann somit jeder Stufe eine bestimmte Durchflussmenge zuordnen. Fortan erhält der Stellungsregler in der Betriebsphase von dem benachbarten Durchflussmessumformer den Durchflussmesswert. Erkennt der Stellungsregler nun eine Abweichung von der zuvor kalibrierten Zuordnung von Durchflussmesswert zu der Histogrammstufe, ist dies ein Indiz für eine Fehlfunktion/Verschleiß im Stellungsregler. Dieser Leistungskennwert (KPI-Wert) kann z. B. einer externen Anwendung zur Verfügung gestellt werden.

Die Nachbarschaftsbeziehung des Aktors 51 zu den Sensoren 41, 42, 43 kann einmalig, z. B. bei Inbetriebnahme des Aktors 51, ermittelt und danach bei Bedarf oder fortlaufend, z. B. in vorgegebenen Zeitabständen, verifiziert werden.

Der wesentliche Vorteil der Erfindung liegt in der automatisierten Erkennung der Nachbarschaftserkennung von Aktor und Sensor, die ohne Engineering-Aufwand durchgeführt werden kann. Auf Basis dieser Information kann die Funktionsfähigkeit des Aktors, beispielsweise in Form von KPI-Werten, ermittelt werden.

## Patentansprüche

1. Verfahren zur Ermittlung von Nachbarschaftsbeziehungen zwischen einem Aktor (51) und mit diesem in einer Anlage (1) zur Steuerung eines technischen Prozesses zusammenwirkenden und mit ihm kommunizierenden Sensoren (41, 42, 43, 44), wobei der Aktor (51) den Prozess beeinflusst und die Sensoren (41, 42, 43, 44) Messwerte von Prozessgrößen erfassen, **dadurch gekennzeichnet, dass** der Aktor (51)
- den Prozess nach einem vorgegebenen Testmuster (17) beeinflusst,
- von den Sensoren (41, 42, 43, 44) als Antworten (16-41, 16-42,16-43; 16'-41 16'-42,16'-42) auf das Testmuster (17) erhaltene Messwertfolgen nach dem vorgegebenen Testmuster absucht und
- den Sensor als den mit der größten Wirkungsnähe zu dem Aktor (51) identifiziert, dessen Antwort hinsichtlich Antwortqualität und Antwortzeit ein vorgegebenes Gütekriterium am besten erfüllt.

2. Verfahren nach Anspruch 1, **dadurch gekennzeichnet, dass** der Aktor (51) zur Prüfung seiner Funktionsfähigkeit in der Anlage (1) Messwerte des identifizierten Sensors verwendet.

3. Verfahren nach Anspruch 1 oder 2, **dadurch gekennzeichnet, dass** der Aktor (51) die Sensoren (41, 42, 43, 44) zur Übermittlung der während der Beeinflussung des Prozesses nach dem vorgegebenen Testmuster (17) erfassten Messwerte an den Aktor (51) aktiviert.

4. Verfahren nach Anspruch 1 oder 2, **dadurch gekennzeichnet, dass** der Aktor (51) die Sensoren (41, 42, 43, 44) zur Speicherung der während der Beeinflussung des Prozesses nach dem vorgegebenen Testmuster (17) erfassten Messwerten aktiviert und anschließend die abgespeicherten Messwertfolgen an den Aktor (51) übermittelt.

5. Verfahren nach einem der vorangehenden Ansprüche, **dadurch gekennzeichnet, dass** der Aktor (51) bei unterschiedlichen Sensortypen den Sensor aus einer Gruppe von jeweils gleichen Sensortypen auswählt.

6. Anordnung zur Ermittlung von Nachbarschaftsbeziehungen zwischen einem Aktor (51) und mit diesem in einer Anlage (1) zur Steuerung eines technischen Prozesses zusammenwirkenden und mit ihm kommunizierenden Sensoren (41, 42, 43, 44), wobei der Aktor (51) den Prozess beeinflusst und die Sensoren (41, 42, 43, 44) Messwerte von Prozessgrößen erfassen, **dadurch gekennzeichnet, dass** der Aktor (51) dazu ausgebildet ist,
- den Prozess nach einem vorgegebenen Testmuster (17) zu beeinflussen,
- von den Sensoren (41, 42, 43, 44) als Antworten (16-41, 16-42,16-43; 16'-41 16'-42,16'-42) auf das Testmuster (17) erhaltene Messwertfolgen nach dem vorgegebenen Testmuster abzusuchen und
- den Sensor als den mit der größten Wirkungsnähe zu dem Aktor (51) zu identifizieren, dessen Antwort hinsichtlich Antwortqualität und Antwortzeit ein vorgegebenes Gütekriterium am besten erfüllt.

7. Anordnung nach Anspruch 6, **dadurch gekennzeichnet, dass** der Aktor (51) dazu ausgebildet ist, zur Prüfung seiner Funktionsfähigkeit in der Anlage (1) Messwerte des identifizierten Sensors zu verwenden.

8. Anordnung nach Anspruch 6 oder 7, **dadurch gekennzeichnet, dass** der Aktor (51) dazu ausgebildet ist, die Sensoren (41, 42, 43, 44) zur Übermittlung der während der Beeinflussung des Prozesses nach dem vorgegebenen Testmuster erfassten Messwerte an den Aktor (51) zu aktivieren.

9. Anordnung nach Anspruch 6 oder 7, **dadurch gekennzeichnet, dass** der Aktor (51) dazu ausgebildet ist, die Sensoren (41, 42, 43, 44) zur Speicherung der während der Beeinflussung des Prozesses nach dem vorgegebenen Testmuster (17) erfassten Messwerten zu aktivieren und anschließend die abgespeicherten Messwertfolgen an den Aktor (51) zu übermitteln.

10. Anordnung nach einem der Ansprüche 6 bis 9, **dadurch gekennzeichnet, dass** der Aktor (51) dazu ausgebildet ist, bei unterschiedlichen Sensortypen den Sensor aus einer Gruppe von jeweils gleichen Sensortypen auszuwählen.

11. Anordnung nach einem der Ansprüche 6 bis 10, **dadurch gekennzeichnet, dass** der Aktor (51) ein Stellungsregler mit Stellventil ist und die Sensoren (41, 42, 43, 44) Durchflussmesser sind.

## Geänderte Patentansprüche

### Geänderte Patentansprüche gemäss Regel 137(2) EPÜ.

1. Verfahren zur Ermittlung von Nachbarschaftsbeziehungen zwischen einem Aktor (51) und mit diesem in einer Anlage (1) zur Steuerung eines technischen Prozesses zusammenwirkenden und mit ihm kommunizierenden Sensoren (41, 42, 43, 44), wobei der Aktor (51) den Prozess beeinflusst und die Sensoren (41, 42, 43, 44) Messwerte von Prozessgrößen erfassen, **dadurch gekennzeichnet, dass** der Aktor (51)
- den Prozess nach einem vorgegebenen Testmuster (17) beeinflusst,
- von den Sensoren (41, 42, 43, 44) als Antworten (16-41, 16-42,16-43; 16'-41 16'-42,16'-42) auf das Testmuster (17) erhaltene Messwertfolgen nach dem vorgegebenen Testmuster absucht und
- den Sensor als den mit der größten Wirkungsnähe zu dem Aktor (51) identifiziert, dessen Antwort hinsichtlich Antwortqualität und Antwortzeit ein vorgegebenes Gütekriterium am besten erfüllt.

2. Verfahren nach Anspruch 1, **dadurch gekennzeichnet, dass** der Aktor (51) zur Prüfung seiner Funktionsfähigkeit in der Anlage (1) Messwerte des identifizierten Sensors verwendet.

3. Verfahren nach Anspruch 1 oder 2, **dadurch gekennzeichnet, dass** der Aktor (51) die Sensoren (41, 42, 43, 44) zur Übermittlung der während der Beeinflussung des Prozesses nach dem vorgegebenen Testmuster (17) erfassten Messwerte an den Aktor (51) aktiviert.

4. Verfahren nach Anspruch 1 oder 2, **dadurch gekennzeichnet, dass** der Aktor (51) die Sensoren (41, 42, 43, 44) zur Speicherung der während der Beeinflussung des Prozesses nach dem vorgegebenen Testmuster (17) erfassten Messwerten aktiviert und anschließend die abgespeicherten Messwertfolgen an den Aktor (51) übermittelt.

5. Verfahren nach einem der vorangehenden Ansprüche, **dadurch gekennzeichnet, dass** der Aktor (51) bei unterschiedlichen Sensortypen die Sensoren aus einer Gruppe von jeweils gleichem Sensortyp auswählt.

6. Anordnung zur Ermittlung von Nachbarschaftsbeziehungen zwischen einem Aktor (51) und mit diesem in einer Anlage (1) zur Steuerung eines technischen Prozesses zusammenwirkenden und mit ihm kommunizierenden Sensoren (41, 42, 43, 44), wobei der Aktor (51) den Prozess beeinflusst und die Sensoren (41, 42, 43, 44) Messwerte von Prozessgrößen erfassen, **dadurch gekennzeichnet, dass** der Aktor (51) dazu ausgebildet ist,
- den Prozess nach einem vorgegebenen Testmuster (17) zu beeinflussen,
- von den Sensoren (41, 42, 43, 44) als Antworten (16-41, 16-42,16-43; 16'-41 16'-42,16'-42) auf das Testmuster (17) erhaltene Messwertfolgen nach dem vorgegebenen Testmuster abzusuchen und
- den Sensor als den mit der größten Wirkungsnähe zu dem Aktor (51) zu identifizieren, dessen Antwort hinsichtlich Antwortqualität und Antwortzeit ein vorgegebenes Gütekriterium am besten erfüllt.

7. Anordnung nach Anspruch 6, **dadurch gekennzeichnet, dass** der Aktor (51) dazu ausgebildet ist, zur Prüfung seiner Funktionsfähigkeit in der Anlage (1) Messwerte des identifizierten Sensors zu verwenden.

8. Anordnung nach Anspruch 6 oder 7, **dadurch gekennzeichnet, dass** der Aktor (51) dazu ausgebildet ist, die Sensoren (41, 42, 43, 44) zur Übermittlung der während der Beeinflussung des Prozesses nach dem vorgegebenen Testmuster erfassten Messwerte an den Aktor (51) zu aktivieren.

9. Anordnung nach Anspruch 6 oder 7, **dadurch gekennzeichnet, dass** der Aktor (51) dazu ausgebildet ist, die Sensoren (41, 42, 43, 44) zur Speicherung der während der Beeinflussung des Prozesses nach dem vorgegebenen Testmuster (17) erfassten Messwerten zu aktivieren und anschließend die abgespeicherten Messwertfolgen an den Aktor (51) zu übermitteln.

10. Anordnung nach einem der Ansprüche 6 bis 9, **dadurch gekennzeichnet, dass** der Aktor (51) dazu ausgebildet ist, bei unterschiedlichen Sensortypen die Sensoren aus einer Gruppe von jeweils gleichem Sensortyp auszuwählen.

11. Anordnung nach einem der Ansprüche 6 bis 10, **dadurch gekennzeichnet, dass** der Aktor (51) ein Stellungsregler mit Stellventil ist und die Sensoren (41, 42, 43, 44) Durchflussmesser sind.
